# EUROPEAN PATENT APPLICATION

(11) **EP 4 718 524 A1**
(43) Date of publication of application: **01.04.2026**
(21) Application number: 25742120.6
(22) Date of filing: 08.01.2025
(51) Int. Cl.: H01M 4/1395, H01M 10/052, B26D 7/08, B26D 3/14, H01M 4/02

(54) **APPARATUS FOR MANUFACTURING ELECTRODE**

(30) Priority: 18.01.2024 KR 20240008004
(71) Applicant: LG Energy Solution, Ltd., Seoul 07335 (KR)
(72) Inventor: KIM, Ki Tae, Daejeon 34122 (KR); KWON, Soon Kwan, Daejeon 34122 (KR); YEON, Eungje, Daejeon 34122 (KR); LEE, Junghoon, Daejeon 34122 (KR); HAN, Suenghoon, Daejeon 34122 (KR)
(74) Representative: Goddar, Heinz J.
(86) International application number: PCT/KR2025/000379
(87) International publication number: WO 2025/155023

(57) **Abstract**

The present invention may provide an apparatus for manufacturing an electrode, the apparatus comprising: a sheet supply unit for supplying a lithium metal sheet; an ultrasonic cutting unit that repeatedly approaches the supplied lithium metal sheet to cut the lithium metal sheet; and a blade that is provided in the cutting unit and forms a cutting line on the lithium metal sheet, wherein the cutting line (CL) is formed inside an outer boundary (OL) of the supplied lithium metal sheet.

## Description

### REFERENCE TO RELATED APPLICATIONS

This application claims the benefit of Korean Patent Application No. 10-2024-0008004, filed on January 18, 2024, in the Korean Intellectual Property Office, the disclosure of which is incorporated herein by reference in its entirety.

### TECHNICAL FIELD

The present disclosure relates to an electrode manufacturing apparatus for manufacturing an electrode including a lithium metal.

### BACKGROUND ART

These days, the demand for mobile devices such as smartphones, tablet personal computers (PCs), and wireless earphones is increasing. In addition, as the development of electric vehicles, energy storage batteries, robots, and satellites is in full swing, research on high-performance rechargeable batteries that are capable of repetitive charging and discharging as an energy source is ongoing.

Rechargeable batteries commercialized at present include a nickel-cadmium battery, a nickel-metal hydride battery, a nickel-zinc battery, and a lithium rechargeable battery. Among them, since a memory effect rarely occurs in a lithium rechargeable battery compared to a nickel-based rechargeable battery, a lithium rechargeable battery has advantages of being freely charged and discharged, having a low self-discharge rate and having a high energy density.

Meanwhile, there is a case when a lithium metal battery uses lithium metal as an anode. Lithium metal is advantageous for increasing energy density but softer than copper (Cu) that has been generally used. Due to such a characteristic of lithium metal, there was a difficulty in the cutting process to form an electrode tab.

To manufacture an anode including an efficient lithium metal, there is a case where a roll-to-roll process is used. In the roll-to-roll process, as lithium metal in a rolled form is unrolled to be consecutively supplied in a sheet form, the supplied sheet may be cut. Here, a problem where a sheet is not properly cut due to distance deviation or meandering movement while cutting may occur. Furthermore, due to the unique softness of lithium metal, a problem where lithium metal attaches to a cutting equipment while cutting or where a residue after cutting sticks together and becomes difficult to handle may occur.

### Detailed Description of the Invention

### Technical Goals

The present disclosure may provide an electrode manufacturing apparatus that, in a battery system that uses a lithium metal as an anode, may address a problem where the lithium metal is not properly cut due to distance deviation or meandering movement and address various problems that may occur during cutting due to the softness of the lithium metal. In addition, the present disclosure may provide a method of manufacturing an electrode using the electrode manufacturing apparatus, or an electrode manufactured by the electrode manufacturing apparatus, or the method of manufacturing the electrode.

### Technical solutions

According to exemplary embodiments of the present disclosure, an electrode manufacturing apparatus may include a sheet supplier configured to supply a lithium metal sheet, a cutter configured to cut the lithium metal sheet in an ultrasonic manner by repeatedly approaching the lithium metal sheet, and a blade provided in the cutter configured to form a cutting line on the lithium metal sheet. The cutting line CL may be formed further inside than an outer boundary OL of the supplied lithium metal sheet.

In the electrode manufacturing apparatus according to an exemplary embodiment of the present disclosure, the cutting line CL may include a protruding line PL corresponding to an electrode tab and an extended line EL leading from the protruding line PL and corresponding to one edge of an electrode. The blade may include a first blade part configured to form the extended line EL and a second blade part configured to form the protruding line PL.

In the electrode manufacturing apparatus according to an exemplary embodiment of the present disclosure, at least a portion of the extended line EL may include a first parallel line CLP1 parallel with a supply direction MD of the lithium metal sheet, and at least a portion of the protruding line PL may include a second parallel line CLP2 parallel with the supply direction MD of the lithium metal sheet. The first blade part may further include a first parallel blade part configured to form the first parallel line CLP1, and the second blade part may further include a second parallel blade part configured to form the second parallel line CLP2.

In the electrode manufacturing apparatus according to an exemplary embodiment of the present disclosure, the cutting line CL may further include a first auxiliary line CLA1 provided at an end portion of the extended line EL to face outward in a width direction of the lithium metal sheet. The first blade part may further include a first auxiliary blade part configured to form the first auxiliary line CLA1.

In the electrode manufacturing apparatus according to an exemplary embodiment of the present disclosure, the cutting line CL may further include a spaced line DL spaced apart from the extended line EL in the width direction TD and corresponding to another edge of the electrode. The blade may further include a third blade part spaced apart from the first blade part and configured to cut an opposite boundary of the lithium metal sheet, and forming the spaced line DL.

In the electrode manufacturing apparatus according to an exemplary embodiment of the present disclosure, at least a portion of the spaced line DL may include a third parallel line CLP3 parallel with the supply direction MD of the lithium metal sheet. The third blade part may further include a third parallel blade part configured to form the third parallel line CLP3.

In the electrode manufacturing apparatus according to an exemplary embodiment of the present disclosure, the cutting line CL may further include a second auxiliary line CLA2 provided at an end portion of the spaced line DL to face outward in the width direction of the lithium metal sheet. The third blade part may further include a second auxiliary blade part configured to form the second auxiliary line CLA2.

In the electrode manufacturing apparatus according to an exemplary embodiment of the present disclosure, the cutting line CL may further include a first auxiliary line CLA1 provided at an end portion of the extended line EL to face outward in the width direction of the lithium metal sheet. The first auxiliary line CLA1 and the second auxiliary line CLA2 may face in opposite directions.

In the electrode manufacturing apparatus according to an exemplary embodiment of the present disclosure, a spaced distance between the first blade part and the third blade part may be shorter than a length of the lithium metal sheet in the width direction TD before cutting.

In the electrode manufacturing apparatus according to an exemplary embodiment of the present disclosure, two adjacent cutting lines CL formed by two consecutive approaches of the cutter may include a margin area M in which the two adjacent cutting lines at least partially overlap with respect to the supply direction MD of the lithium metal sheet.

In the electrode manufacturing apparatus according to an exemplary embodiment of the present disclosure, a first remaining sheet may be formed as the lithium metal sheet is cut by the first blade part and the second blade part. The first remaining sheet formed by consecutive approaches of the cutter may have an integrated form.

In the electrode manufacturing apparatus according to an exemplary embodiment of the present disclosure, a second remaining sheet may be formed as the lithium metal sheet is cut by the third blade part. The second remaining sheet formed by consecutive approaches of the cutter may have an integrated form.

### Effects of the Invention

According to the exemplary embodiments, it is possible to improve, in a battery system that uses a lithium metal as an anode, a problem where the lithium metal is not properly cut due to distance deviation or meandering movement and improve some of various problems that may occur during cutting in consideration of the softness of the lithium metal.

### BRIEF DESCRIPTION OF DRAWINGS

Drawings illustrated in the present disclosure are based on exemplary embodiments of the present disclosure, the ratios of widths, breadths, or thicknesses (or heights) of each configuration is to explain the present disclosure in detail, and the ratios thereof may be different from actual ratios. In addition, in coordinate systems shown in drawings, each axis may be perpendicular to each other, and a direction of an arrow may be a + direction, and the opposite direction (a direction rotated 180 degrees) of the direction of an arrow may be a - direction.
FIG. 1 is a perspective view illustrating at least a portion of an electrode manufacturing apparatus according to an exemplary embodiment of the present disclosure.
FIG. 2 is a top plan view illustrating a cutting line formed or to be formed on a lithium metal sheet according to an exemplary embodiment of the present disclosure.
FIG. 3 is a top plan view illustrating a portion of a cutter in an electrode manufacturing apparatus according to an exemplary embodiment of the present disclosure.
FIG. 4 is a top plan view illustrating a cutting line formed or to be formed on a lithium metal sheet according to an exemplary embodiment of the present disclosure.
FIG. 5 is a top plan view illustrating a lithium metal sheet cut along a cutting line according to an exemplary embodiment of the present disclosure.
FIG. 6 is a perspective view illustrating at least a portion of an electrode manufacturing apparatus according to an exemplary embodiment of the present disclosure.

### DETAILED DESCRIPTION

Before a detailed explanation of the present disclosure, the words and terms used in this specification and the scope of claims may not be understood as being limited to general or lexical meanings. In addition, based on the principle that the applicant may properly define the disclosure with a notion of terms in a way that best explains the disclosure, the terms or words should be interpreted as meanings and notions corresponding to the technical idea of the present disclosure. The exemplary embodiments described in this specification and the configurations shown in the drawings represent merely the most desired embodiments of the present disclosure and do not encompass the entire technical idea of the present disclosure. Accordingly, at the point of the present application, the possibility of various equivalents and modified examples that may serve as replacements should be understood.

Identical reference numbers or signs described in each appended drawing in this specification may represent components or elements performing practically the same functions. For the convenience of explanation and understanding, different exemplary embodiments may use the same reference numbers or signs for explanation. In other words, when a plurality of drawings illustrate a component having the same reference number, not all the plurality of drawings may indicate one exemplary embodiment.

In the description below, a singular expression includes a plural expression unless clearly indicated otherwise in context. Terms such as "comprise or include" or "configure" should be understood as indicating the existence of a feature, number, step, operation, element, component, or combination thereof described in this specification, and the terms do not exclude in advance the existence or the possibility of one or more additional features, numbers, steps, operations, elements, components, or combinations thereof.

Furthermore, in the description below, expressions such as above, upper portion, below, lower portion, side surface, frontside, and backside are expressed based on directions shown in drawings, and when a direction of an object changes, the expressions may be expressed differently.

In addition, to distinguish one element from another, terms including ordinals such as "first" or "second" may be used in this specification and claims. Such ordinals are used to distinguish identical or similar elements from each other, and by using such ordinals, the terms should not be construed as having limited meanings. As an example, elements combined with such ordinals should not be construed as having a limited order of use or order of arrangement by the numbers. As occasion demands, each ordinal may be replaced each other to be used.

Hereinafter, exemplary embodiments of the present disclosure are described in detail with reference to the accompanying drawings. However, the spirit of the present disclosure may not be limited to suggested exemplary embodiments. For example, a person of ordinary skill in the art who understands the spirit of the present disclosure may suggest other exemplary embodiments included within the scope of the spirit of the present disclosure through adding, modifying, or deleting elements, but it may be understood that such suggestions may be included within the scope of the spirit of the present disclosure. Forms, sizes, and the like of elements in the drawings may be exaggerated for clearer explanation.

In this specification, as used herein, battery may have the same meaning as a cell. In addition, a battery or a cell may be a term collectively referring to a battery cell that is a unit thereof and a battery module or a battery pack including a battery cell.

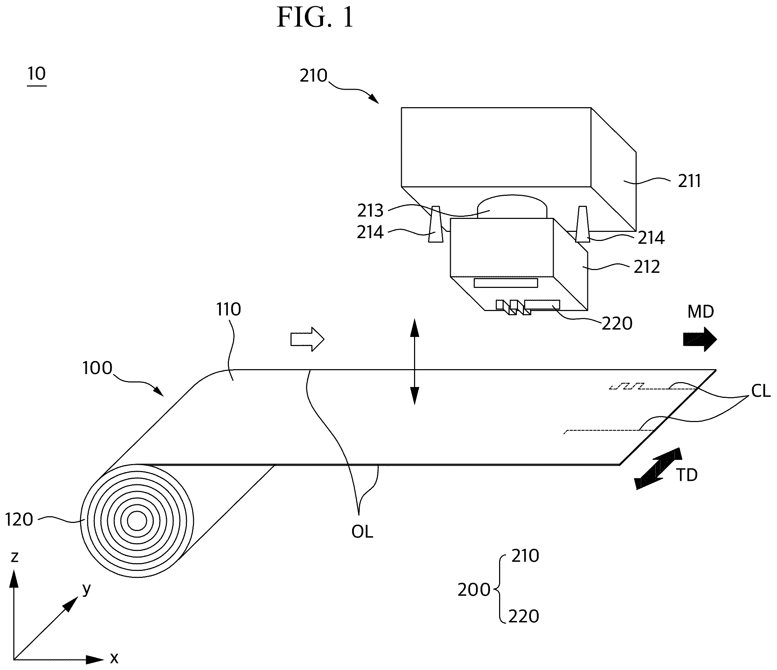

FIG. 1 is a perspective view illustrating at least a portion of an electrode manufacturing apparatus 10 according to an exemplary embodiment of the present disclosure. The electrode manufacturing apparatus 10 may include a sheet supplier 100 supplying a lithium metal sheet 110. A manner of supplying the lithium metal sheet 110 may not be particularly limited, but may be a manner of unrolling a roll of lithium metal 120 at a predetermined speed. The sheet supplier 100 may include a device unrolling the roll of lithium metal 120 so that the lithium metal sheet 110 is continuously supplied and a moving device moving the lithium metal 110 that is unrolled to be a sheet form in a supply direction MD. The sheet supplier 100 may use a so-called roll-to-roll manner.

The electrode manufacturing apparatus 10 may include a cutter 200 repeatedly approaching the supplied lithium metal sheet 110. The cutter 200 may cut the lithium metal sheet 110. In addition, the cutter 200 may not be particularly limited if used in the art, but may use an ultrasonic manner in consideration of the softness of a lithium metal. The ultrasonic manner may refer to, for example, Korean Laid-open Patent Publication No. 10-2022-0035741.

The cutter 200 may perform cutting in an ultrasonic manner. The cutter 200 may include an ultrasonic generator 210 that may perform cutting in the ultrasonic manner. The ultrasonic generator 210 may include an oscillator 211 generating ultrasonic waves, a booster 213 amplifying or reducing vibration energy generated from the oscillator 211, and a horn 212 delivering vibration energy of the booster 213 to a blade 220 to be described below. In addition, the ultrasonic generator 210 may further include a vision inspector 214 that is capable of a vision inspection to check quality of cutting as needed. The oscillator 211 may generate ultrasonic waves having a frequency of 15 kilohertz (kHz) to 40 kHz and an amplitude of 10 micrometer (*µ*m) to 60 *µ*m. The ultrasonic cutting the lithium metal sheet 110 with vibration energy caused by ultrasonic waves minimizes sticking despite the softness of a lithium metal.

The cutter 200 may be spaced apart from one surface of the supplied lithium metal sheet 110 in a vertical direction and may repeatedly approach the lithium metal sheet 110 for cutting. The approach to the lithium metal sheet 110 may be implemented by a moving device, and the cutter 200 may move perpendicularly to one surface of the lithium metal sheet 110. In other words, the supply direction MD of the lithium metal sheet 110 and a moving direction of the cutter 200 may be perpendicular to each other.

The sheet supplier 100 may continuously supply the lithium metal sheet 110, and the cutter 200 may repeatedly approach the lithium metal sheet 110 continuously supplied and cut the lithium metal sheet 110, and as a result, the lithium metal sheet 110 may form a cutting line CL along the supply direction MD.

The sheet supplier 100 may provide time for cutting by momentarily suspending the supply of the lithium metal sheet 110 when the cutter 200 contacts the lithium metal sheet 110. The sheet supplier 100 may resume the suspended supply of the lithium metal sheet 110 when the cutter 200 that is in contact with the lithium metal sheet 110 releases the contact from the lithium metal sheet 110 and returns to an original position.

For example, referring to FIG. 1, the lithium metal sheet 110 may be supplied in a +x direction through the sheet supplier 100. The cutter 200 may approach the supplied lithium metal sheet 110 by moving in a -z direction from a position spaced apart by a predetermined distance in a +z direction, which is perpendicular to the lithium metal sheet 110. The cutter 200 that approaches and is in contact with the lithium metal sheet 110 may return to the original position by moving in the +z direction again. The cutter 200 may repeatedly approach the lithium metal sheet 110 by moving in the -z direction and approaching the supplied lithium metal sheet 110. While the cutter 200 is approaching again, the lithium metal sheet 110 may be supplied in the +x direction to continue the cutting line CL in the supply direction MD.

The cutter 200 may include the blade 220 forming the cutting line CL on the lithium metal sheet 110. The blade 220 may form the cutting line CL on the lithium metal sheet 110, in other words, cut the lithium metal sheet 110 by contacting the supplied lithium metal sheet 110.

The cutting line CL formed by the blade 220 may be formed further inside than an outer boundary OL in a width direction TD of the supplied lithium metal sheet 110. Accordingly, a remainder, which is an area between the cutting line CL and the outer boundary OL of the lithium metal sheet 110, may not be fragmented but integrated and thus may be easily handled. A detailed explanation with respect thereto will be described below.

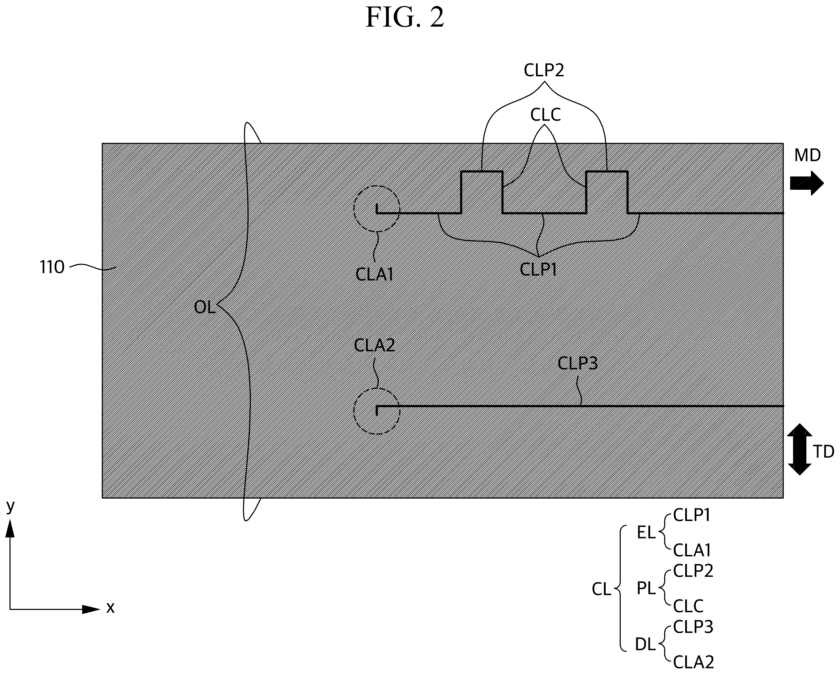

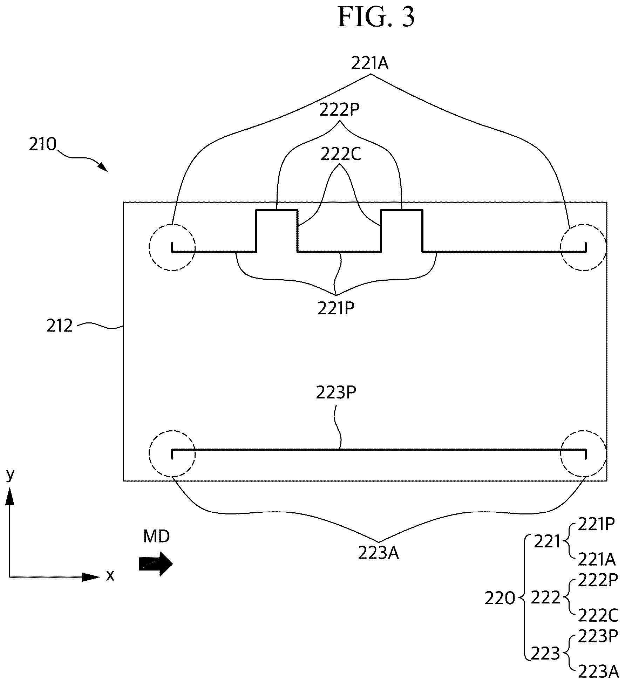

FIG. 2 is a top plan view illustrating the cutting line CL formed, or to be formed, on the lithium metal sheet 110 according to an exemplary embodiment of the present disclosure. FIG. 3 is a top plan view illustrating a portion of the cutter 200 in the electrode manufacturing apparatus 10 according to an exemplary embodiment of the present disclosure, and specifically, a top plan view illustrating a portion where the blade 200 is positioned.

The electrode manufacturing apparatus 10 may manufacture an electrode, and in particular, may manufacture an anode using lithium metal. The electrode may include an electrode tab, and the electrode manufacturing apparatus 10 may form the electrode tab by cutting the lithium metal sheet 110 and naturally form an edge of the electrode.

The cutting line CL may include a protruding line PL corresponding to the electrode tab. A portion of the lithium metal sheet 110 cut along the protruding line PL may be the electrode tab. In addition, the cutting line CL may include an extended line EL corresponding to one edge of the electrode. A portion of the lithium metal sheet 110 cut along the extended line EL may be one edge of the electrode. The extended line EL may lead from the protruding line PL.

The blade 220 may include a first blade part 221 forming the extended line EL on the supplied lithium metal sheet 110. In addition, the blade 220 may include a second blade part 222 forming the protruding line PL on the supplied lithium metal sheet 110. The first blade part 221 and the second blade part 222 may be connected to each other, and accordingly, the extended line EL may lead from the protruding line PL. The first blade part 221 and the second blade part 222 may be in an integrated form.

At least a portion of the extended line EL may include a first parallel line CLP1 parallel with the supply direction MD of the lithium metal sheet 110. At least a portion of the protruding line PL may include a second parallel line CLP2 parallel with the supply direction MD of the lithium metal sheet 110. The first parallel line CLP1 may be formed to be further apart from the adjacent outer boundary OL of the supplied lithium metal sheet 110 than the second parallel line CLP2.

The first blade part 221 may further include a first parallel blade part 221P forming the first parallel line CLP1. The second blade part 222 may further include a second parallel blade part 222P forming the second parallel line CLP2. The first parallel blade part 221P may be provided to be further apart from the outer boundary OL of the supplied lithium metal sheet 110 than the second parallel blade part 222P.

The protruding line PL may further include a connection line CLC parallel with the width direction TD of the lithium metal sheet 110. The connection line CLC may connect the first parallel line CLP1 and the second parallel line CLP2 to each other.

The second blade part 222 may further include a connection blade part 222C forming the connection line CLC. The connection blade part 222C may connect the first parallel blade part 221P and the second parallel blade part 222P to each other. Through the connection blade part 222C, the first blade part 221 and the second blade part 222 may be connected to each other to be in an integrated form.

The cutting line CL may further include a first auxiliary line CLA1 provided at an end portion of the extended line EL to face outward in the width direction TD of the lithium metal sheet 110. The first blade part 221 may further include a first auxiliary blade part 221A forming the first auxiliary line CLA1.

As the cutting line CL includes the first auxiliary line CLA1, a problem where the lithium metal sheet 110 is not properly cut due to distance deviation or meandering movement while cutting may be minimized. Particularly, when the lithium metal sheet 110 is supplied by using a roll-to-roll process, there is a case where the supplied lithium metal sheet 110 moves slightly in the width direction TD. This may be called meandering movement, and if cutting is performed under meandering movement circumstances, a portion of the lithium metal sheet 110 may not be cut or an electrode may be obtained in an unintended shape as a previous cutting line CL and a following cutting line CL may not connect. As the first auxiliary line CLA1 may face the width direction TD of the lithium metal sheet 110, the possibility of the previous cutting line CL and the following cutting line CL to be connected may increase even under meandering movement circumstances, so that the problem where the lithium metal sheet 110 is not properly cut may be minimized.

In this case, the first auxiliary line CLA1 may face outward in the width direction TD of the lithium metal sheet 110, so that when electrodes are consecutively produced, an electrode shape formed afterward may not be affected.

The first auxiliary line CLA1 may be provided to be closer to the adjacent outer boundary OL of the supplied lithium metal sheet 110 than the first parallel line CLP1. The first auxiliary line CLA1 may not be further apart from the outer boundary OL of the supplied lithium metal sheet 110 than the first parallel line CLP1. Through the positional relationship of the first auxiliary line CLA1 and the first parallel line CLP1, the first auxiliary line CLA1 may not affect the electrode shape formed afterward when consecutively producing the electrodes.

The first auxiliary line CLA1 may be formed parallel with the width direction TD. Alternatively, the first auxiliary line CLA1 may form a predetermined angle with the width direction TD. Alternatively, the first auxiliary line CLA1 may have a curved shape starting along a longitudinal direction of the cutting line CL and naturally leading toward the adjacent outer boundary OL of the lithium metal sheet 110.

The cutting line CL may include a spaced line DL spaced apart from the extended line EL in the width direction TD of the lithium metal sheet 110 and corresponding to another edge of an electrode. Another edge of the electrode may refer to the other side of one edge cut along the extended line EL.

The blade 220 may include a third blade part 223 spaced apart from the first blade part 221 and forming the spaced line DL by cutting an opposite boundary of the lithium metal sheet 110. The opposite boundary of the lithium metal sheet 110 may refer to a boundary in the opposite side of one boundary of the lithium metal sheet 110 adjacent to the first blade part 221. The first blade part 221 and the third blade part 223 may not be connected to each other. In addition, the second blade part 222 integrated with the first blade part 221 may not be connected to the third blade part 223.

At least a portion of the spaced line DL may include a third parallel line CLP3 parallel with the supply direction MD of the lithium metal sheet 110, and the third blade part 223 may further include a third parallel blade part 223P forming the third parallel line CLP3.

By forming the spaced line DL, one edge of the electrode and another edge of the electrode may be parallel even under meandering movement circumstances. For example, when the outer boundary OL of the supplied lithium metal sheet 110 forms the another edge of the electrode without the spaced line DL being separately provided, the extended line EL of the cutting line CL and another edge of the lithium metal sheet 110 may not be parallel when meandering movement occurs, which may lead to a problem where one edge and another edge of the finally cut lithium metal sheet 110 are not parallel.

Meanwhile, a length of the third parallel line CLP3 in the supply direction MD may be identical to the sum of the total length of the first parallel line CLP1 in the supply direction MD and the total length of the second parallel line CLP2 in the supply direction MD. Here, being identical refers to be substantially identical, and a margin of error may be within 5 percent (%).

The cutting line CL may further include a second auxiliary line CLA2 provided at an end portion of the spaced line DL to face outward in the width direction TD of the lithium metal sheet 110. The third blade part 223 may further include a second auxiliary blade part 223A forming the second auxiliary line CLA2.

As the cutting line CL includes the second auxiliary line CLA2, as with the first auxiliary line CLA1, a problem where the lithium metal sheet 110 is not properly cut due to distance deviation or meandering movement when cutting may be minimized. The second auxiliary line CLA2 may face outward in the width direction TD of the lithium metal sheet 110 and minimize the problem where the lithium metal sheet 110 is not properly cut. In addition, the second auxiliary line CLA2 may face outward in the width direction TD of the lithium metal sheet 110 and may not affect an electrode shape formed afterward when consecutively producing electrodes.

The second auxiliary line CLA2 may be provided closer to the adjacent outer boundary OL of the supplied lithium metal sheet 110 than the third parallel line CLP3. In other words, the second auxiliary line CLA2 may not be provided further apart from the adjacent outer boundary OL of supplied the lithium metal sheet 110 than the third parallel line CLP3. Through the positional relationship of the second auxiliary line CLA2 and the third parallel line CLP3, the second auxiliary line CLA2 may not affect the electrode shape formed afterward when consecutively producing the electrodes.

The first auxiliary line CLA1 and the second auxiliary line CLA2 may face opposite directions. A direction where the first auxiliary line CLA1 faces may refer to an extended direction of the first auxiliary line CLA1 in the width direction TD based on the first parallel line CLP1. Likewise, a direction where the second auxiliary line CLA2 faces may refer to an extended direction of the second auxiliary line CLA2 in the width direction TD based on the third parallel line CLP3. In other words, referring to FIG. 2, the direction where the first auxiliary line CLA1 faces may be a + y direction, and the direction where the second auxiliary line CLA2 faces may be a - y direction.

Since the first auxiliary line CLA1 and the second auxiliary line CLA2 face opposite directions to each other, a marginal cutting area may be provided even when meandering movement occurs, and a problem where the lithium metal sheet 110 is not properly cut may be minimized, and an electrode shape formed afterward may not be affected when consecutively producing electrodes.

Meanwhile, a distance where the first blade part 221 is spaced apart from the third blade part 223 may be shorter than a length of the width direction TD of the lithium metal sheet 110 before cutting. Through this, the cutting line CL may be formed further inside than the outer boundary OL of the supplied lithium metal sheet 110, and a fragmented residue may not be formed, and an integrated remainder may be formed that is more easily handled.

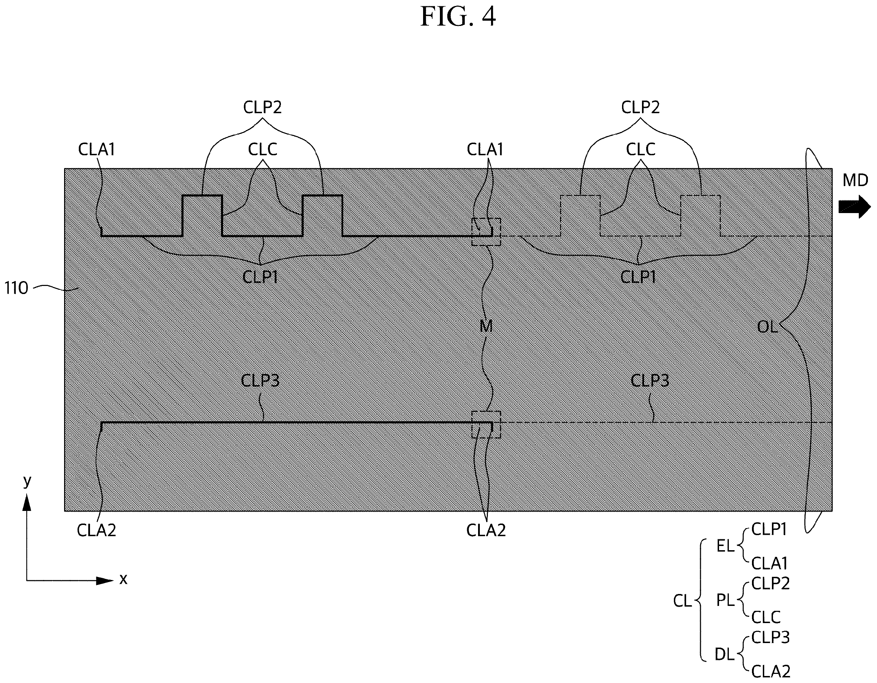

FIG. 4 is a top plan view illustrating the cutting line CL formed or to be formed on the lithium metal sheet 110 according to an exemplary embodiment of the present disclosure.

Two cutting lines CL may be formed by two consecutive approaches of the cutter 200. Two adjacent cutting lines CLs formed in this manner may include a margin area M in which the two adjacent cutting lines at least partially overlap with respect to the supply direction MD of the lithium metal sheet 110. When the cutting line CL includes the margin area M, a marginal cutting area may be provided even when meandering movement occurs, and a problem where the lithium metal sheet 110 is not properly cut as the previous cutting line CL and the following cutting line CL are spaced apart due to an approaching interval of the cutter 200, and a margin of error of supplying rate of the lithium metal sheet 110, may be minimized.

The margin area M may be formed as portions of each extended line EL in the two adjacent cutting lines CLs overlap. The margin area M may be formed as portions of each spaced line DL in the two adjacent cutting lines CLs overlap.

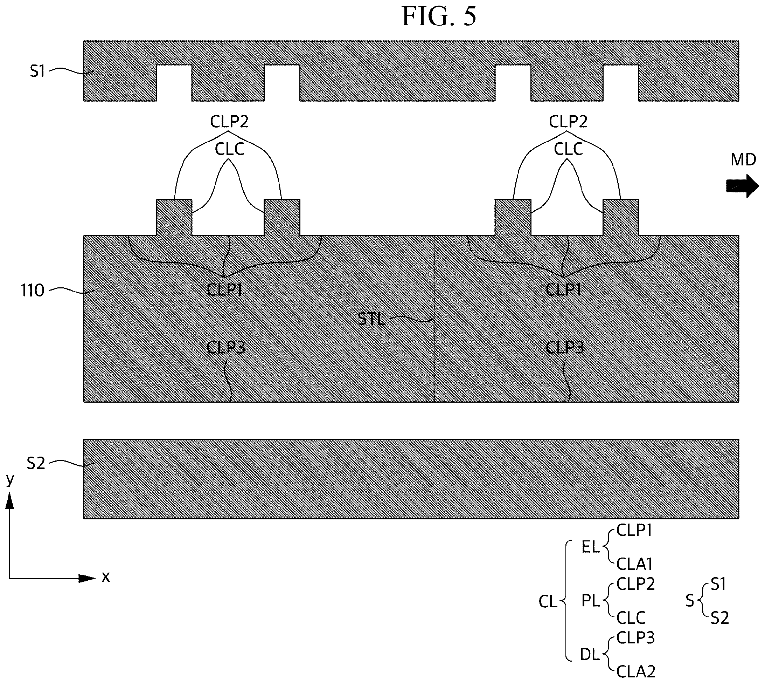

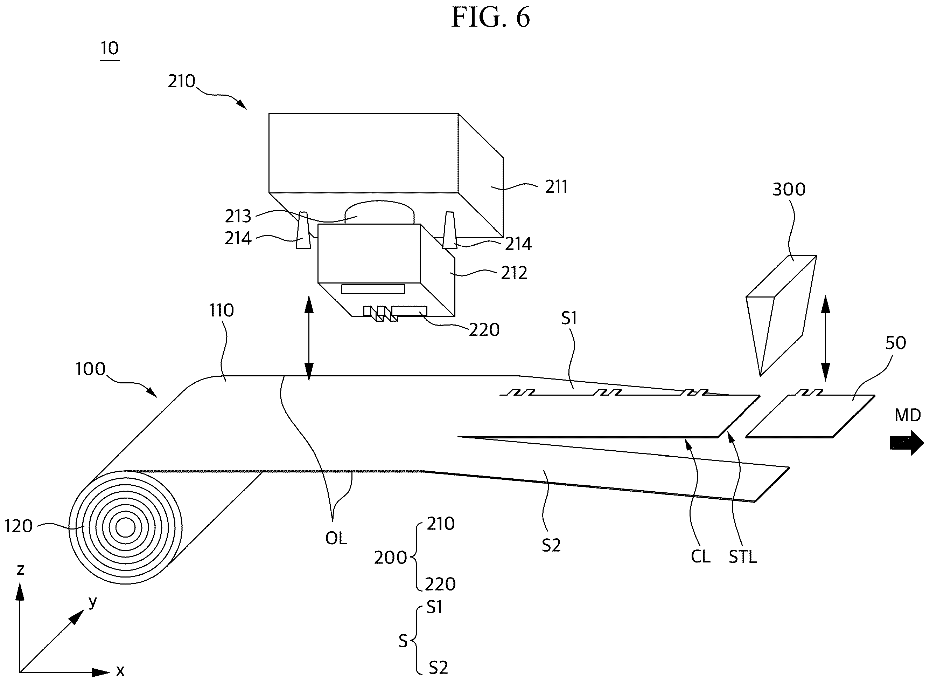

FIG. 5 is a top plan view illustrating the lithium metal sheet 110 cut along the cutting line CL according to an exemplary embodiment of the present disclosure. FIG. 6 is a perspective view illustrating at least a portion of the electrode manufacturing apparatus 10 according to an exemplary embodiment of the present disclosure.

A first remaining sheet S1 may be formed except an electrode portion as the supplied lithium metal sheet 110 is cut by the first blade part 221 and the second blade part 222. The first remaining sheet S1 may have an integrated form. In other words, the first remaining sheet S1 may be formed integrated, not fragmented, so that the first remaining sheet S1 may be more easily handled.

A second remaining sheet S2 may be formed except the electrode portion as the supplied lithium metal sheet 110 is cut by the third blade part 223. The second remaining sheet S2 may have an integrated form. In other words, the second remaining sheet S2 may be formed integrated, not fragmented, so that the first remaining sheet S2 may be more easily handled.

The electrode manufacturing apparatus 10 may include, in addition to the sheet supplier 100 and the cutter 200, a slitter 300 forming an electrode 50 by slitting the cut lithium metal sheet 110 to meet standard requirements. Here, the electrode 50 may be a complete product with an active material layer formed, or a half-completed product without an active material layer formed. The electrode 50 manufactured by the electrode manufacturing apparatus 10 may be used as an anode of a battery cell. The slitter 300 may form a slit line STL on the cut lithium metal sheet 110. Furthermore, the slitter 300, as with the cutter 200, may use an ultrasonic manner. In addition, the electrode manufacturing apparatus 10 may not be limited to the sheet supplier 100, the cutter 200, and the slitter 300, but may further include a variety of equipment that may be used in an electrode processing widely known in the art.

With the electrode manufacturing apparatus 10 according to an exemplary embodiment of the present disclosure, an electrode including a lithium metal may be manufactured. Particularly, a manufactured electrode may be used as an anode of a battery cell. In such a case where a lithium metal is used as an anode of a battery cell, the battery cell may be called a lithium metal battery. The lithium metal battery may be, although the types are not particularly limited, a lithium-sulfur battery, a lithium-air battery, or the like.

The electrode manufacturing apparatus 10 according to an exemplary embodiment of the present disclosure may be widely applied to electric vehicles, battery charging stations, and other green technologies such as solar energy generation and wind power generation using batteries. Furthermore, the electrode manufacturing apparatus 10 according to an exemplary embodiment of the present disclosure may be applied to eco-friendly electric vehicles or hybrid vehicles to prevent climate change by curbing air pollution and greenhouse gas emission.

Various exemplary embodiments of the present disclosure are described in detail above, but the scope of rights in the present disclosure is not limited thereto, and it is understood by those who skilled in the art that various modifications and equivalent arrangements included within the spirit and scope of the appended claims. In addition, in aforementioned exemplary embodiments, some configurations may be removed when embodied, and each exemplary embodiment may be combined to each other to be embodied.

### Description of Symbols

- 10: Electrode manufacturing apparatus
- 50: Electrode
- 100: Sheet supplier
- 110: Lithium metal sheet
- 120: Lithium metal roll
- 200: Cutter
- 210: Ultrasonic generator
- 220: Blade
- 221: First blade part
- 221P: First parallel blade part
- 221A: First auxiliary blade part
- 222: Second blade part
- 222P: Second parallel blade part
- 222C: Connection blade part
- 223: Third blade part
- 223P: Third parallel blade part
- 223A: Second auxiliary blade part
- 300: Slitter
- S1: First remaining sheet
- S2: Second remaining sheet

## Claims

1. An electrode manufacturing apparatus comprising:
a sheet supplier configured to supply a lithium metal sheet;
a cutter configured to cut the lithium metal sheet in an ultrasonic manner by repeatedly approaching the supplied lithium metal sheet; and
a blade provided in the cutter and configured to form a cutting line (CL) on the lithium metal sheet, and
wherein the cutting line (CL) is formed further inside than an outer boundary (OL) of the supplied lithium metal sheet.

2. The electrode manufacturing apparatus of claim 1,
wherein the cutting line (CL) comprises a protruding line (PL) corresponding to an electrode tab and an extended line (EL) leading from the protruding line (PL) and corresponding to one edge of the electrode, and
wherein the blade comprises a first blade part configured to form the extended line (EL) and a second blade part configured to form the protruding line (PL).

3. The electrode manufacturing apparatus of claim 2,
wherein at least a portion of the extended line (EL) comprises a first parallel line (CLP1) parallel with a supply direction (MD) of the lithium metal sheet, and at least a portion of the protruding line (PL) comprises a second parallel line (CLP2) parallel with the supply direction (MD) of the lithium metal sheet, and
wherein the first blade part further comprises a first parallel blade part configured to form the first parallel line (CLP1), and the second blade part further comprises a second parallel blade part configured to form the second parallel line (CLP2).

4. The electrode manufacturing apparatus of claim 2,
wherein the cutting line (CL) further comprises a first auxiliary line (CLA1) provided at an end portion of the extended line (EL) to face outward in a width direction of the lithium metal sheet, and
wherein the first blade part further comprises a first auxiliary blade part configured to form the first auxiliary line (CLA1).

5. The electrode manufacturing apparatus of claim 2,
wherein the cutting line (CL) further comprises a spaced line (DL) spaced apart from the extended line (EL) in a width direction (TD) and corresponding to another edge of the electrode, and
wherein the blade further comprises a third blade part spaced apart from the first blade part and configured to cut an opposite boundary of the lithium metal sheet and form the spaced line (DL).

6. The electrode manufacturing apparatus of claim 5,
wherein at least a portion of the spaced line (DL) comprises a third parallel line (CLP3) parallel with a supply direction (MD) of the lithium metal sheet, and wherein the third blade part further comprises a third parallel blade part configured to form the third parallel line (CLP3).

7. The electrode manufacturing apparatus of claim 5,
wherein the cutting line (CL) further comprises a second auxiliary line (CLA2) provided at an end portion of the spaced line (DL) to face outward in a width direction of the lithium metal sheet, and
wherein the third blade part further comprises a second auxiliary blade part configured to form the second auxiliary line (CLA2).

8. The electrode manufacturing apparatus of claim 7,
wherein the cutting line (CL) further comprises a first auxiliary line (CLA1) provided at an end portion of the extended line (EL) to face outward in the width direction of the lithium metal sheet, and
wherein the first auxiliary line (CLA1) and the second auxiliary line (CLA2) face opposite directions.

9. The electrode manufacturing apparatus of claim 5,
wherein a distance spaced between the first blade part and the third blade part is shorter than a length of the lithium metal sheet in the width direction (TD) before cutting.

10. The electrode manufacturing apparatus of claim 1,
wherein two adjacent cutting lines (CL) formed by two consecutive approaches of the cutter include a margin area (M) in which the two adjacent cutting lines at least partially overlap with respect to a supply direction (MD) of the lithium metal sheet.

11. The electrode manufacturing apparatus of claim 2,
wherein a first remaining sheet is formed as the lithium metal sheet is cut by the first blade part and the second blade part, and
wherein the first remaining sheet formed by consecutive approaches of the cutter has an integrated form.

12. The electrode manufacturing apparatus of claim 5,
wherein a second remaining sheet is formed as the lithium metal sheet is cut by the third blade part, and
wherein the second remaining sheet formed by consecutive approaches of the cutter has an integrated form.
